# EUROPEAN PATENT APPLICATION

(11) **EP 1 195 085 A2**
(43) Date of publication of application: **10.04.2002**
(21) Application number: 01123213.9
(22) Date of filing: 01.10.2001
(51) Int. Cl.: A01K 5/02

(54) **Programmable dispenser for dispensing dry food, particularly for pets and the like**

(30) Priority: 04.10.2000 IT MI002148
(71) Applicant: Riviera, Riccardo, 46043 Castiglione delle Stiviere (IT)
(72) Inventor: Riviera, Riccardo, 46043 Castiglione delle Stiviere (IT)
(74) Representative: Modiano, Guido, Dr.-Ing.

(57) **Abstract**

A programmable dispenser (1) for dispensing dry food, particularly for pets and the like, comprising a body (2) that contains a dry and loose product and is provided at its bottom with an assembly for continuous dispensing that is controlled by a central control unit with means for programming the dispensing frequency and the amount of product to be dispensed.

## Description

The present invention relates to a programmable dispenser for dispensing dry food, particularly for pets and the like.

It is known that so-called automatic feeders are already commercially available and are used to supply food, generally in granular form, for dogs, cats and other pets.

The general structure of the feeders provides dosage devices that allow to dispense at preset times amounts of food that are constant and therefore do not allow to adapt to the needs and habits of the individual pet.

Another drawback of known solutions is the fact that one cannot adjust the dispensing intervals in a continuous manner and at will, and therefore it is not always possible to meet the correct feeding requirements.

The aim of the invention is to eliminate the drawbacks noted above by providing a programmable dispenser for dispensing dry food, particularly for pets and the like, that allows to adjust continuously and at will both the dispensing intervals and the amount of product being dispensed.

Within the scope of this aim, an object of the invention is to provide a dispenser that can be easily adapted to the different types and sizes of pet, offering an assembly that is compact and very functional and which can be used very easily.

Another object of the present invention is to provide a programmable dispenser that thanks to its particular constructive characteristics is capable of giving the greatest assurances of reliability and safety in use.

Another object of the present invention is to provide a programmable dispenser that can be easily obtained starting from commonly commercially available elements and materials and is furthermore competitive from a merely economic point of view.

This aim and these and other objects that will become better apparent hereinafter are achieved by a programmable dispenser for dispensing dry food, particularly for pets and the like, according to the invention, characterized in that it comprises a body that contains a dry and loose product and is provided at its bottom with an assembly for continuous dispensing that is controlled by a central control unit with means for programming the dispensing frequency and the amount of product to be dispensed.

Further characteristics and advantages of the invention will become better apparent from the description of a preferred but not exclusive embodiment of a programmable dispenser for dispensing dry food, particularly for pets and the like, illustrated only by way of non-limitative example in the accompanying drawings, wherein:
Figure 1 is a perspective view of the programmable dispenser according to the invention;
Figure 2 is a sectional view of the dispenser, taken along the line II-II of Figure 1;
Figure 3 is a partially cutout view of the dispenser, illustrating the step for dispensing the product;
Figure 4 is a sectional view, taken along the line IV-IV of Figure 3.

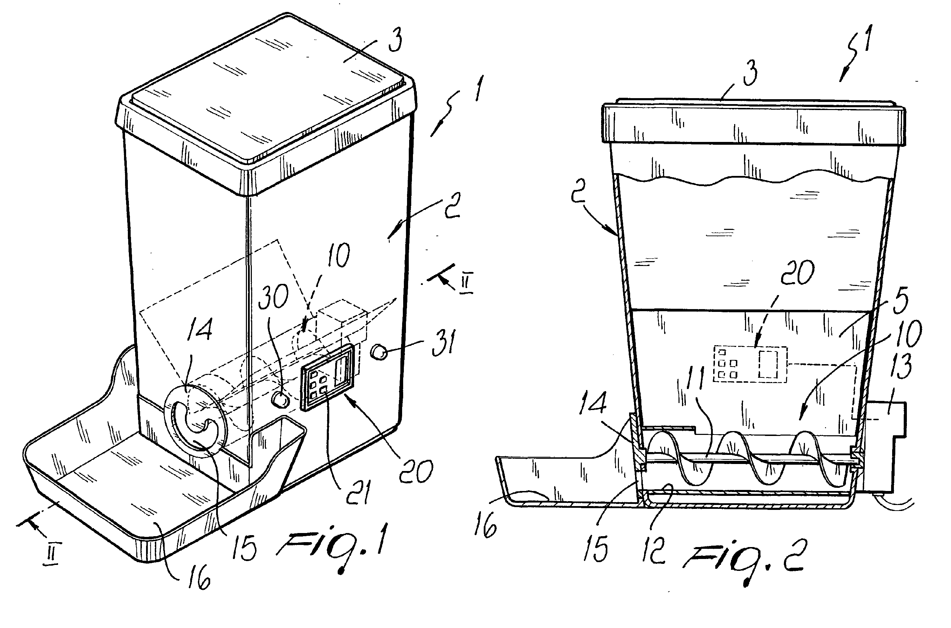

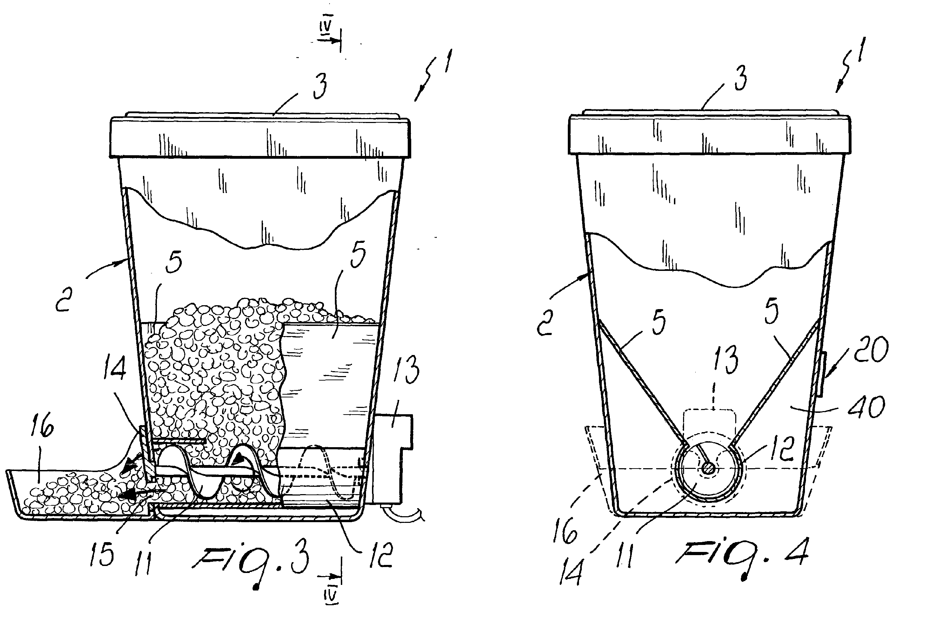

With reference to the figures, the programmable dispenser for dispensing dry food, particularly for pets and the like, according to the invention, generally designated by the reference numeral 1, comprises a container body 2, which is advantageously closed at the top by a lid 3 and forms internally a hopper-like region provided by means of inclined walls 5 that cause the loose dry product that constitutes the food for pets and the like to converge toward a continuous dispensing assembly, generally designated by the reference numeral 10, which is advantageously provided by means of a screw feeder 11 accommodated in a cylindrical chamber 12 that is open toward the inside of the container 2.

The screw feeder 11 has, at one of its ends, a coupling element for connection to a gearmotor assembly 13 that is advantageously located outside the container.

At its other end, the screw feeder 11 is supported by a ring 14 with a through opening 15 that leads into a collection tray 16, where the product dispensed by the screw feeder arranges itself.

An important particularity of the invention is constituted by the fact that a central control unit, designated by the reference numeral 20, is provided and drives the operation of the gearmotor 13.

The central unit 20 allows to program the frequency of the meals and therefore their number and also allows to set, by means of the buttons 21, the amount of product to be dispensed in each instance.

The amount dispensed is determined by the number of turns imparted to the screw feeder that transfers outwardly the loose granular product.

It should be added to the above that on the outer surface of the container, preferably laterally adjacent to the region of the central control unit 20, there is a first red luminous indicator 30, which lights up when the power plug is inserted, and there is a second green luminous indicator 31, which lights up when the programmed food is dispensed.

All the connection circuits are located in a compartment 40, which is formed between the container and an inclined wall 5 that provides the hopper-like bottom, thus offering adequate protection to the assembly.

From the above description it is thus evident that the invention achieves the intended aim and objects, and in particular the fact is stressed that a programmable dispenser is provided which allows to optimize product dispensing very easily and precisely, thus allowing to adapt to all the contingent requirements of the pet.

For the sake of completeness of description, it is specified that the dispenser can be produced in a wide range of sizes, depending on the types and sizes of the pets for which it is intended.

The invention thus conceived is susceptible of numerous modifications and variations, all of which are within the scope of the inventive concept.

All the details may further be replaced with other technically equivalent elements.

In practice, the materials used, as well as the contingent shapes and dimensions, may be any according to requirements.

The disclosures in Italian Patent Application No. MI2000A002148 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A programmable dispenser (1) for dispensing dry food, particularly for pets and the like, **characterized in that** it comprises a body (2) that contains a dry and loose product and is provided at its bottom with an assembly (10) for continuous dispensing that is controlled by a central control unit (20) with means for programming the dispensing frequency and the amount of product to be dispensed.

2. The programmable dispenser according to claim 1, **characterized in that** it comprises, on the internal bottom of said container body (2), inclined walls (5) that form a hopper-like region that converges toward said continuous dispensing assembly (10).

3. The programmable dispenser according to claim 1, **characterized in that** it comprises a removable lid (3) that can be coupled to said container body (2).

4. The programmable dispenser according to one or more of the preceding claims, **characterized in that** said continuous dispensing assembly (10) comprises a screw feeder (11) accommodated in a cylindrical chamber (12) that is open toward the inside of said container body (2).

5. The programmable dispenser according to one or more of the preceding claims, **characterized in that** said screw feeder (11) has, at one end, a coupling element for the connection of a gearmotor assembly (13), and is connected, at its other end, to a ring (14) with a through opening (15) that leads into a collection tray (16) arranged in front of said container body (2).

6. The programmable dispenser according to one or more of the preceding claims, **characterized in that** said central control unit (20) is provided with buttons (21) for programming the frequency of the meals and the amount of product to be dispensed in each instance.

7. The programmable dispenser according to one or more of the preceding claims, **characterized in that** said central control unit (20) can be accessed from the outside of said container body (2).

8. The programmable dispenser according to one or more of the preceding claims, **characterized in that** it comprises a first red luminous indicator (30) which lights up when the power supply is connected and a second green luminous indicator (31) which lights up when the programmed food is dispensed.

9. The programmable dispenser according to one or more of the preceding claims, **characterized in that** said central control unit (20) is accommodated in a compartment (40) formed between said container body (2) and one of said inclined walls (5) that provide said hopper-like bottom.
